# FASCICULE DE BREVET EUROPEEN

(11) **EP 3 159 525 B1**
(45) Date de publication et mention de la délivrance du brevet: **29.08.2018**
(21) Numéro de dépôt: 16194617.3
(22) Date de dépôt: 19.10.2016
(51) Int. Cl.: F02K 9/42, F02K 9/64, F02K 9/97

(54) **CHAMBRE PROPULSIVE ET PROCEDE DE FABRICATION**
BRENNKAMMER UND HERSTELLUNGSVERFAHREN
PROPULSION CHAMBER AND MANUFACTURING METHOD

(30) Priorité: 20.10.2015 FR 1560003
(43) Date de publication de la demande: 26.04.2017
(73) Titulaire: ArianeGroup SAS, 75015 Paris (FR)
(72) Inventeur: DU TERTRE, Alban, 27200 VERNON (FR); GUICHARD, Didier, 27120 MENILLES (FR); THOMAS, Cédric, Pierre, Michel, 91120 PALAISEAU (FR)
(74) Mandataire: Calvo de Nó, Rodrigo

(56) Documents cités:
- EP-A2- 1 227 071
- WO-A1-2015/055924
- DE-A1-102014 100 345
- US-B1- 6 582 542

## Description

### Arrière-plan de l'invention

La présente invention concerne le domaine des chambres de combustion de moteurs-fusées et leur fabrication.

Plus particulièrement, la présente invention concerne les chambres de combustion comprenant une paroi interne métallique, une enveloppe externe et un circuit de refroidissement. Typiquement, de telles chambres de combustion sont utilisées dans des moteurs-fusées à ergols liquides et circuit d'alimentation régénératif, au moins un des ergols traversant alors le circuit de refroidissement de la chambre de combustion pour refroidir la paroi interne tout en se réchauffant préalablement à son injection dans la chambre de combustion. La paroi interne métallique y assure la transmission de chaleur de l'intérieur de la chambre de combustion au circuit de refroidissement.

Normalement, l'enveloppe externe représente l'élément structural principal d'une telle chambre de combustion. Elle reprend notamment des efforts de pression à partir de l'intérieur de la chambre de combustion, ainsi que la poussée générée par le moteur-fusée et divers efforts dynamiques subis par le moteur-fusée lors de son fonctionnement.

Dans l'état de la technique, on connaît principalement des chambres de combustion à enveloppe externe également métallique et notamment en nickel. Toutefois, une telle enveloppe externe métallique présente normalement un coefficient d'expansion thermique important, ce qui résulte en des contraintes thermomécaniques importantes entre l'enveloppe relativement froide et la paroi intérieure relativement chaude, contraintes particulièrement fortes quand un ergol cryogénique, tel que l'hydrogène liquide, traverse le circuit de refroidissement de la chambre de combustion. Par ailleurs, cet hydrogène peut aussi avoir des effets néfastes sur les liaisons mécaniques de l'enveloppe externe avec la paroi interne et avec d'autres éléments métalliques. WO 2015/055924 décrit une chambre de propulsion pour fusée et un procédé de fabrication d'une telle chambre. Pour résoudre ces problèmes, ainsi que pour réduire le coût et la durée de fabrication de la chambre de combustion, il a été proposé d'utiliser des matériaux composites à matrice organique dans l'enveloppe externe. Ces matériaux composites présentent l'avantage de pouvoir offrir des propriétés thermomécaniques plus adaptées aux contraintes subies par l'enveloppe externe de la chambre de combustion, tout en étant plus légers et résistant mieux à la contamination par l'hydrogène et avec un coefficient de dilatation thermique comparativement faible. Toutefois, il est difficile d'assurer une bonne liaison mécanique entre ces matériaux et des éléments métalliques comme la paroi interne. Des liaisons métalliques ont été proposées dont la masse annule toutefois en grande partie l'avantage de la légèreté de l'enveloppe externe en matériau composite à matrice organique.

### Objet et résumé de l'invention

La présente divulgation vise à remédier à ces inconvénients. Plus spécifiquement, cette divulgation vise à proposer une chambre de combustion de moteur-fusée à ergol liquide, comprenant au moins une paroi interne métallique, une enveloppe externe en matériau composite à matrice organique et un circuit de refroidissement, qui offre une masse réduite tout en assurant une bonne liaison mécanique entre l'enveloppe externe et la paroi interne.

Ce but est atteint grâce au fait que la chambre de combustion comprend en outre au moins un premier embout axial, solidaire de la paroi interne métallique et présentant au moins une protubérance radiale reçue dans une concavité d'une face interne de la paroi externe, cette concavité étant située axialement entre une première et une deuxième ceinture de fibres de renfort orientées de manière sensiblement circonférentielle dans ladite enveloppe externe.

Grâce à ces dispositions, lesdites ceintures de fibres de renfort bloquent de manière effective la protubérance radiale dans la concavité, assurant ainsi une liaison mécanique particulièrement solide entre l'enveloppe externe et l'embout dont est solidaire la paroi interne.

Parmi les matériaux composites à matrice organique on connaît notamment ceux renforcés par des fibres de carbone. Les fibres de carbone présentent des propriétés mécaniques très utiles, notamment une grande résistance en traction, mais aussi un coefficient d'expansion thermique comparativement faible et même, dans certains cas, négatif. Les matériaux composites à matrice organique renforcés par des fibres de carbone peuvent donc présenter des propriétés thermomécaniques très intéressantes et notamment un coefficient d'expansion thermique presque nul dans certaines directions suivant les orientations choisies pour les renforts. En conséquence et afin notamment de réduire les contraintes thermomécaniques sur l'enveloppe externe et sur sa liaison avec l'embout, mais aussi sur la paroi interne, ledit matériau composite à matrice organique peut comprendre des fibres de renfort en carbone.

Afin de retenir l'enveloppe externe contre l'embout, rendant ainsi la liaison mécanique entre les deux encore plus solide, lesdites ceintures de fibres de renfort peuvent entourer au moins une couche interne de l'enveloppe externe. Par ailleurs, les ceintures de fibres de renfort peuvent être précontraintes en tension pour mieux serrer l'embout. La protubérance radiale peut s'étendre sur un pourtour du premier embout axial de manière à assurer la liaison sur tout ce pourtour.

La paroi interne peut former un col de tuyère convergente-divergente, permettant ainsi le refroidissement de ce col par le circuit de refroidissement. Dans ce cas, la chambre propulsive peut comprendre en outre une pièce annulaire intercalée entre la paroi interne et un segment cylindrique de l'enveloppe externe autour dudit col de tuyère, assurant ainsi le maintien du col de tuyère sans compliquer la fabrication de l'enveloppe externe.

Afin de transmettre au moins une force axiale entre la pièce annulaire et l'enveloppe externe sans passer par la paroi interne, la chambre propulsive peut aussi comprendre en outre un dispositif de liaison apte à assurer cette transmission. Ce dispositif de liaison peut par exemple comprendre une clavette et un pion.

Afin notamment de simplifier la fabrication du circuit de refroidissement, la chambre propulsive peut comprendre en outre une barrière d'étanchéité entre le circuit de refroidissement et l'enveloppe externe. Cette barrière d'étanchéité peut par exemple être formée par un film de polyimide apte à être exposé à des températures cryogéniques, quoique d'autres matériaux, notamment polymères, similairement aptes à être exposés à ces températures, soient également envisageables.

Normalement, la liaison entre l'enveloppe externe et la paroi interne sera assurée aux deux extrémités de la chambre propulsive. Pour cela, la chambre propulsive pourra comprendre un deuxième embout axial, solidaire d'une autre extrémité de ladite paroi interne et présentant au moins une autre protubérance radiale reçue dans une autre concavité d'une face interne de l'enveloppe externe, cette autre concavité étant située axialement entre une troisième et une quatrième ceinture de fibres de renfort orientées de manière sensiblement circonférentielle dans ladite enveloppe externe. Néanmoins, des moyens de liaison alternatifs sont également envisageables pour cette autre extrémité.

La présente divulgation concerne également un procédé de fabrication d'une telle chambre propulsive, comprenant au moins la pose de fibres autour d'un mandrin incorporant au moins ledit premier embout, pour former au moins une couche interne de l'enveloppe externe, lesdites fibres épousant un contour de la protubérance radiale d'au moins le premier embout pour former la concavité dans laquelle cette protubérance radiale est reçue, le bobinage de fibres de renfort supplémentaires en direction sensiblement circonférentielle pour former au moins lesdites première et deuxième ceintures de fibres de renfort, l'imprégnation des fibres avec une résine liquide et le durcissement de la résine pour former la matrice organique du matériau composite de l'enveloppe externe. L'ordre d'énumération de ces étapes n'implique aucun ordre de mise en oeuvre particulier. Plus spécifiquement, les fibres posées autour du mandrin pour former au moins la couche interne de l'enveloppe peuvent être imprégnées de résine liquide avant, pendant et/ou après l'étape de pose. La résine peut être une résine thermodurcissable, son durcissement pouvant alors être assuré par cuisson, mais elle peut alternativement être une résine thermoplastique, durcissant alors lors de son refroidissement.

Grâce à ce procédé, la liaison mécanique entre l'enveloppe et l'embout est encore renforcée, notamment par l'adhésion de la résine thermodurcissable à l'embout. Pour encore améliorer cette adhésion, une surface de l'embout directement en contact avec la résine liquide peut être rendue rugueuse, par exemple en fabricant la protubérance radiale par fabrication additive.

Suivant une première alternative, le mandrin autour duquel les fibres sont posées pour former l'enveloppe externe peut comprendre un corps principal apte à être retiré après le durcissement de la résine, pour être remplacé à l'intérieur de l'enveloppe externe par le circuit de refroidissement et la paroi interne. Ainsi, après le durcissement, le corps principal du mandrin peut être extrait de l'intérieur de l'enveloppe externe et la paroi interne et le circuit de refroidissement de la chambre propulsive être insérés à l'intérieur de l'enveloppe externe et fixées au premier embout, par exemple par soudure.

Suivant une deuxième alternative, ledit mandrin peut incorporer aussi au moins la paroi interne et le circuit de refroidissement, à part le premier embout. Ainsi, l'enveloppe externe pourra être directement formée sur cet ensemble.

Par ailleurs, plusieurs procédés alternatifs peuvent être utilisés pour la pose des fibres. Ainsi, lesdites fibres peuvent être tressées ou déposées par enroulement filamentaire autour du mandrin, ou des feuilles incorporant lesdites fibres être drapées autour du mandrin, pour former au moins la couche interne de l'enveloppe externe.

Par ailleurs, lesdites protubérances radiales de l'au moins un embout peuvent être fabriquées par un procédé de fabrication additive, de manière à obtenir une rugosité de surface offrant une plus grande adhésion à l'enveloppe externe.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1 est une vue schématique d'un moteur fusée ;
- la figure 2 est une coupe longitudinale d'une chambre propulsive suivant un premier mode de réalisation ;
- les figures 3A à 3C illustrent des étapes d'un procédé de fabrication de la chambre propulsive de la figure 2 ;
- la figure 4 est une coupe longitudinale d'une chambre propulsive suivant un deuxième mode de réalisation ;
- les figures 5A à 5E illustrent des étapes d'un premier procédé de fabrication de la chambre propulsive de la figure 4 ;
- les figures 6A à 6F illustrent des étapes d'un deuxième procédé de fabrication de la chambre propulsive de la figure 4 ;
- les figures 7A à 7G illustrent des étapes d'un troisième procédé de fabrication de la chambre propulsive de la figure 4 ;
- les figures 8A et 8B illustrent deux étapes d'assemblage d'une chambre propulsive suivant un troisième mode de réalisation.

### Description détaillée de l'invention

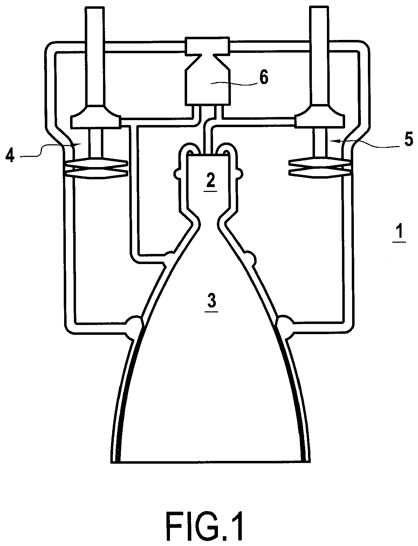

La figure 1 montre une vue schématique d'un moteur-fusée 1 à ergols liquides. Ce moteur-fusée 1 comprend une chambre propulsive 2 comprenant une chambre de combustion 2a et un col 2b de tuyère convergente-divergente prolongé par un divergent 3, ainsi qu'une première turbopompe 4, une deuxième turbopompe 5 et un générateur de gaz 6 destinés à assurer l'alimentation en ergols de la chambre propulsive 2 à partir de réservoirs correspondants (non illustrés). Chacune des turbopompes comprend au moins une pompe et une turbine reliées par un arbre rotatif commun, de manière à ce que la pompe puisse être actionnée par la turbine à travers l'arbre rotatif.

En fonctionnement, un premier ergol liquide, qui peut par exemple être un ergol cryogénique comme l'hydrogène liquide, est pompé par la première turbopompe 4 vers la chambre propulsive 2 et vers le générateur de gaz 6. Un deuxième ergol, qui peut aussi être un ergol cryogénique comme l'oxygène liquide, est pompé par la deuxième turbopompe 5 aussi vers la chambre propulsive 2 et vers le générateur de gaz 6. Dans la chambre propulsive 2, une réaction chimique exothermique entre les deux ergols génère des gaz de combustion à haute température, accélérés ensuite à vitesse supersonique par leur détente dans la tuyère 2b, de manière à générer une poussée par réaction dans le sens opposé. Comme illustré, la chambre propulsive 2 est refroidie par le premier ergol avant son injection. D'autre part, la fraction des ergols alimentant le générateur de gaz 6 y réagit aussi de manière exothermique pour générer des gaz de combustion à haute température, dont la détente dans les turbines des deux turbopompes 4, 5 en assure l'actionnement.

Des moteurs-fusées suivant des configurations différentes sont également envisageables. Ainsi, par exemple, dans les moteurs-fusées dits à cycle expandeur, les turbopompes ne sont pas actionnées par des gaz de combustion provenant d'un générateur de gaz, mais par au moins un des ergols après avoir été chauffé par de la chaleur générée dans la chambre de combustion. La présente invention est également applicable dans ces configurations alternatives, ainsi qu'aux essais d'autres types de machines.

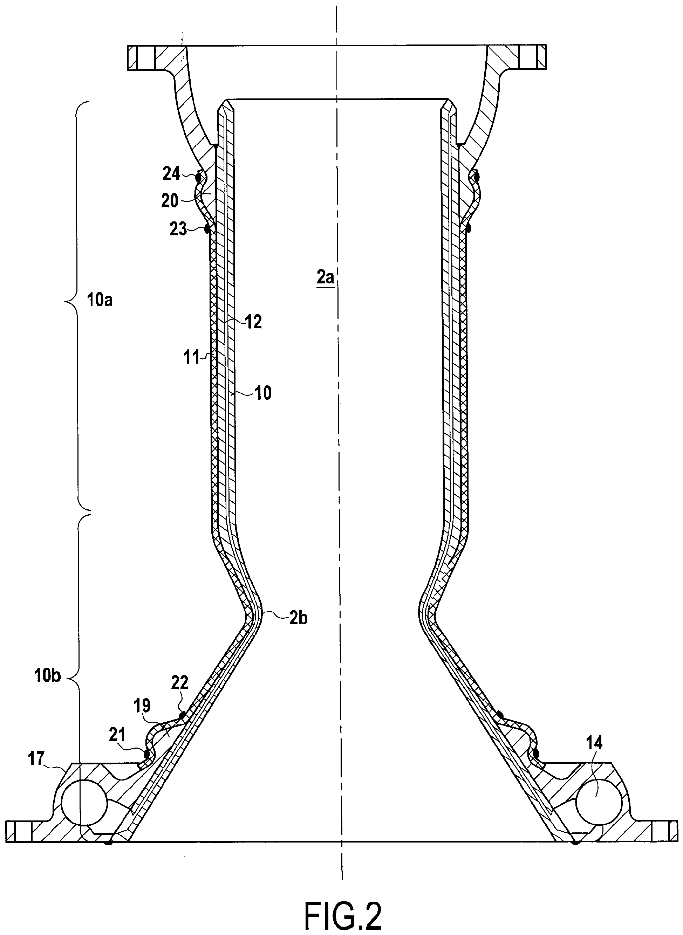

La figure 2 illustre en plus grand détail un premier mode de réalisation de la chambre propulsive 2. Comme on peut le voir, cette chambre propulsive 2 comprend une paroi interne 10, une enveloppe externe 11 et un circuit de refroidissement 12 formé par des canaux formés dans la paroi interne 10. La paroi interne 10 est en matériau métallique à haute conductivité thermique. Ce matériau métallique peut notamment être du cuivre ou un alliage ayant le cuivre comme principal composant. Elle comporte un segment supérieur 10a sensiblement cylindrique, qui définit la chambre de combustion 2a et un segment inférieur 10b définissant le col 2b de tuyère convergente-divergente en aval de la chambre de combustion 2a.

L'enveloppe externe 11 est en matériau composite à matrice organique renforcé par des fibres. La matrice organique peut notamment être formée par une résine thermodurcissable telle qu'une résine époxyde, phénolique ou de bismaléimide (BMI) ou par une résine thermoplastique telle qu'une résine de polyamide, de polyéther éther cétone (PEEK), ou de polysulfure de phénylène (PPS). Les fibres de renfort peuvent notamment comprendre des fibres de carbone, quoique d'autres fibres soient également envisageables en combinaison ou alternativement aux fibres de carbone. Les fibres de renfort peuvent être structurées suivant un empilement de couches unidirectionnelles, un arrangement de faisceaux de fibres croisés et/ou être un tressage bi- ou tridimensionnel. Dans ce premier mode de réalisation, l'enveloppe externe 11 épouse étroitement le contour extérieur de la paroi interne 10, y compris au niveau du col 2b de tuyère.

Les canaux du circuit de refroidissement 12 sont disposés de manière à conduire l'ergol d'une volute d'alimentation 14 à proximité d'une extrémité inférieure de la chambre propulsive 1 vers des injecteurs (non illustrés) à proximité d'une extrémité supérieure de la chambre propulsive 1. Dans le mode de réalisation illustré, ces canaux sont noyés dans la masse de la paroi interne. Toutefois, il est aussi envisageable qu'ils prennent la forme de rainures creusées sur une surface externe de la paroi interne 10. En particulier dans ce dernier cas, un film d'étanchéité, par exemple en polyimide sensiblement étanche à l'hydrogène cryogénique, telle que la poly (4,4'-oxydiphenylene-pyromellitimide), peut être interposé entre les canaux du circuit de refroidissement 12 et l'enveloppe externe 11 de manière à empêcher des fuites à travers cette enveloppe externe.

A chaque extrémité, la chambre propulsive comprend aussi un embout axial 17, 18 métallique et solidaire de la paroi interne 10. Chaque embout axial 17, 18 peut avoir été formé intégralement avec la paroi interne 10 et/ou avoir été fixé à la paroi interne 10 par exemple par soudage. Chaque embout axial 17, 18 présente une protubérance radiale 19, 20 s'étendant sur tout un pourtour externe de l'embout axial 17,18 correspondant. Alternativement, toutefois, chaque embout pourrait présenter une pluralité de protubérances radiales locales arrangées autour de ce pourtour externe.

Chaque protubérance radiale 19, 20 est reçue dans une concavité correspondante dans une face interne de l'enveloppe externe 11. Afin de retenir axialement chaque protubérance radiale 19, 20 dans chaque concavité correspondante, assurant ainsi la fixation de l'enveloppe externe sur les embouts axiaux 17,18 et la paroi interne 10, des ceintures 21,22,23,24 de fibres de renfort situées, sur une face externe de l'enveloppe externe 11, axialement de part et d'autre de chaque protubérance radiale 19, 20 et concavité correspondante. Les fibres de renfort formant ces ceintures 21 à 24 sont orientées de manière sensiblement circonférentielle autour de l'enveloppe externe 11 et l'embout axial 17,18 correspondant. Elles peuvent être précontraintes en tension, de manière à mieux retenir les embouts axiaux 17,18, indépendamment de la dilatation ou contraction thermique de ceux-ci.

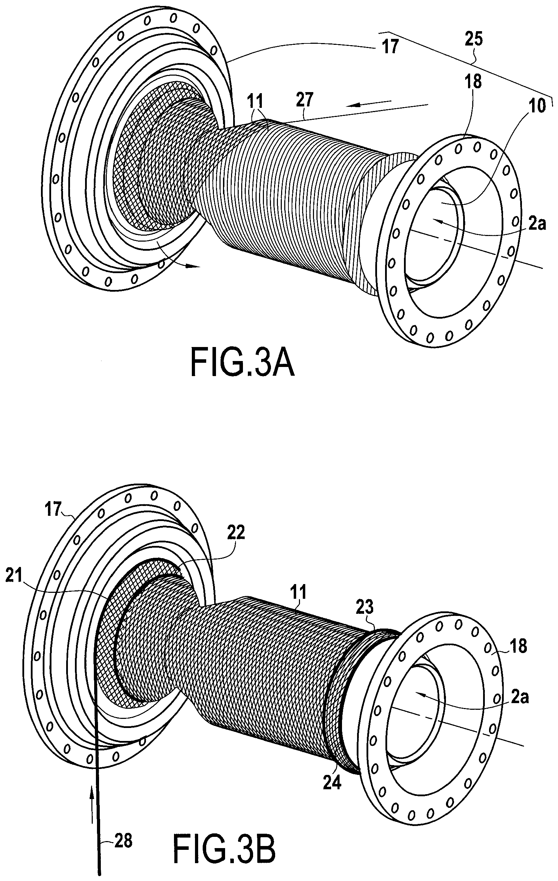

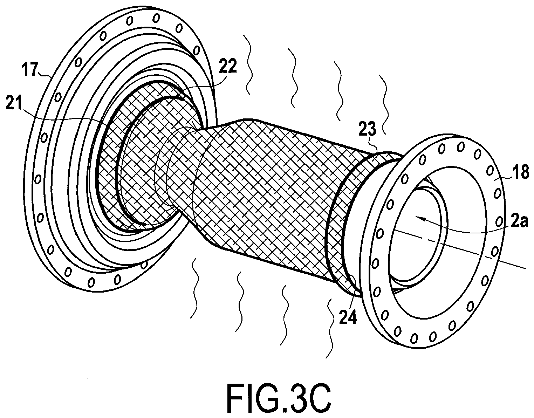

Les figures 3A à 3C illustrent schématiquement trois étapes d'un procédé permettant de fabriquer la chambre propulsive 2 suivant ce premier mode de réalisation. Dans une première étape, illustrée sur la figure 3A, on fournit un mandrin 25 formé par au moins la paroi interne 10 et les embouts axiaux 17, 18 et incorporant le circuit de refroidissement 12 et des fibres 27 de renfort sont imprégnées de résine liquide et posées autour du mandrin 25, de manière à former l'enveloppe externe 11. Dans le procédé illustré, cette pose est effectuée par enroulement filamentaire. Lors de cette pose, les fibres 27 imprégnées vont épouser les contours des protubérances radiales 19,20 des embouts axiaux 17,18 pour former les concavités dans laquelle ces protubérances radiales 19,20 sont reçues. Un autre mode de pose de fibres possible ici serait le tressage sur le même mandrin 25. Dans une deuxième étape, illustrée sur la figure 3B, des fibres de renfort supplémentaires 28 sont bobinées de manière circonférentielle autour du mandrin 25 et des fibres déjà posées pour former les ceintures 21 à 24 adjacentes aux protubérances radiales 19, 20. Lors de cette étape, il est possible de régler la tension de bobinage, de manière à établir une précontrainte en tension des fibres de renfort supplémentaires 28 des ceintures 21 à 24. Par ailleurs, les fibres de renfort supplémentaires 28 formant les ceintures 21 à 24 peuvent ne pas être préimprégnées, puisque l'excès de résine des premières fibres 27 de renfort pourrait suffire à imprégner les ceintures 21 à 24. Toutefois, ces fibres de renfort supplémentaires 28 peuvent aussi être préimprégnées, suivant le choix de la personne du métier. Finalement, dans une troisième étape, illustrée sur la figure 3C, on procède au durcissement de la résine. Dans le procédé illustré, la résine est une résine thermodurcissable. En conséquence, dans cette troisième étape le durcissement est effectué par cuisson dans un four ou autoclave. Toutefois, il serait alternativement envisageable d'utiliser une résine thermoplastique, rendue liquide à chaud et durcissant lors de son refroidissement.

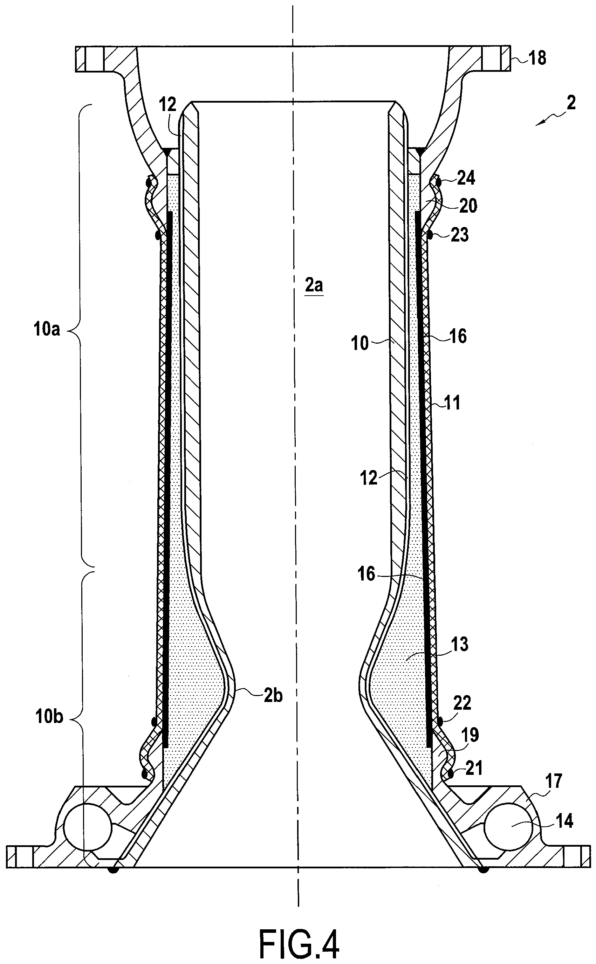

La figure 4 illustre un deuxième mode de réalisation de la chambre propulsive 2. Dans ce deuxième mode de réalisation, l'enveloppe externe 11 est sensiblement cylindrique autour du col 2b, ce qui laisse un volume important entre le segment inférieur 10b de la paroi interne 10 et l'enveloppe externe 11. Pour remplir au moins partiellement ce volume, une pièce annulaire 13 est interposée entre la paroi interne 10 et l'enveloppe externe 11. Cette pièce annulaire 13 peut être en matériau principalement polymère, par exemple une polyimide, ou métallique, plein ou ajouré et elle peut être monobloc ou résulter d'un assemblage de plusieurs éléments, par exemple de deux demi-coquilles liées ou non entre-elles. Comme déjà suggéré comme alternative dans la description du premier mode de réalisation, les canaux prennent la forme de rainures creusées sur une surface externe de la paroi interne 10 et un film d'étanchéité, par exemple en polyimide sensiblement étanche à l'hydrogène cryogénique, telle que la poly (4,4'-oxydiphenylene-pyromellitimide), est interposé entre les canaux du circuit de refroidissement 12 et l'enveloppe externe 11 de manière à empêcher des fuites à travers cette enveloppe externe. Plus spécifiquement, dans ce deuxième mode de réalisation, le film d'étanchéité 16 est interposé entre la pièce annulaire 13 et l'enveloppe externe 11. Le reste de la chambre propulsive 2 selon ce deuxième mode de réalisation est analogue à celle suivant le premier mode de réalisation et les éléments équivalents reçoivent les mêmes repères sur les dessins.

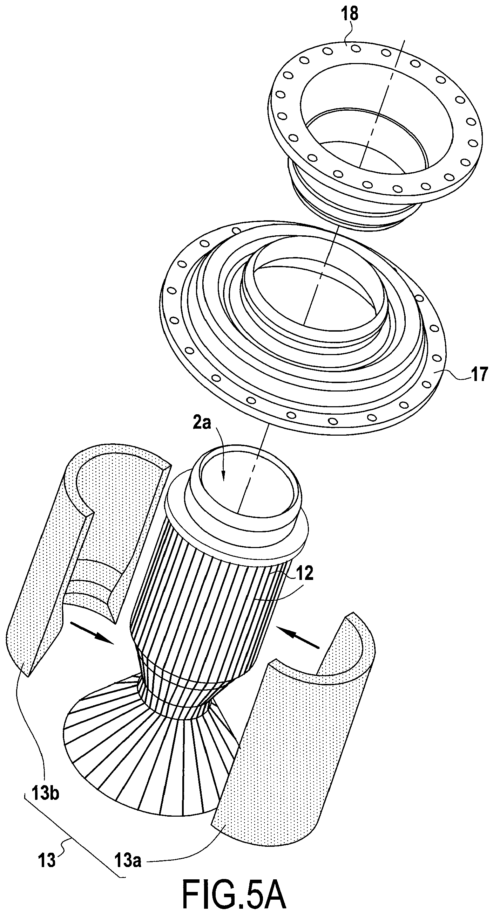

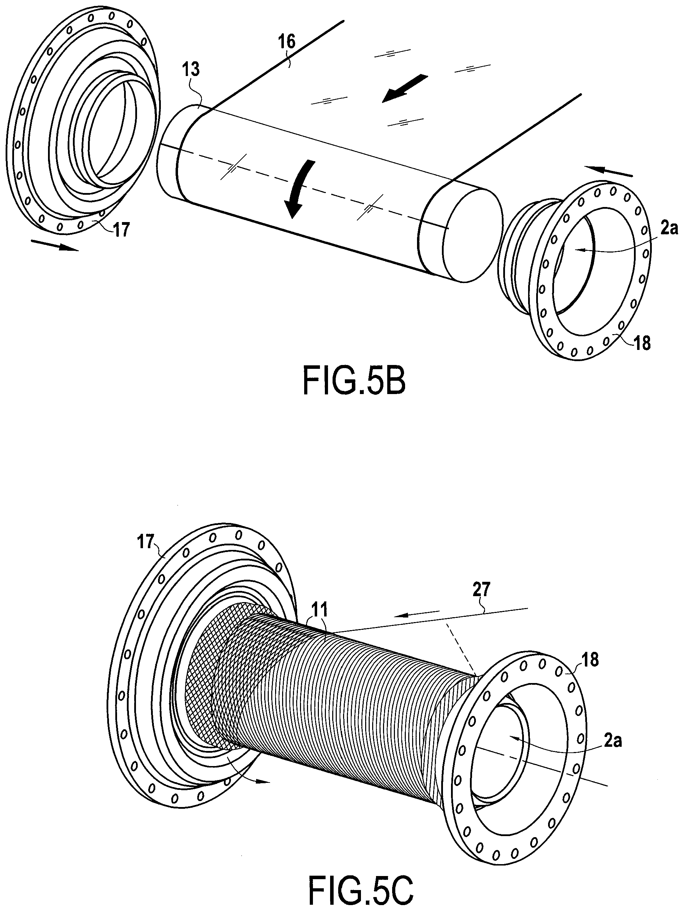

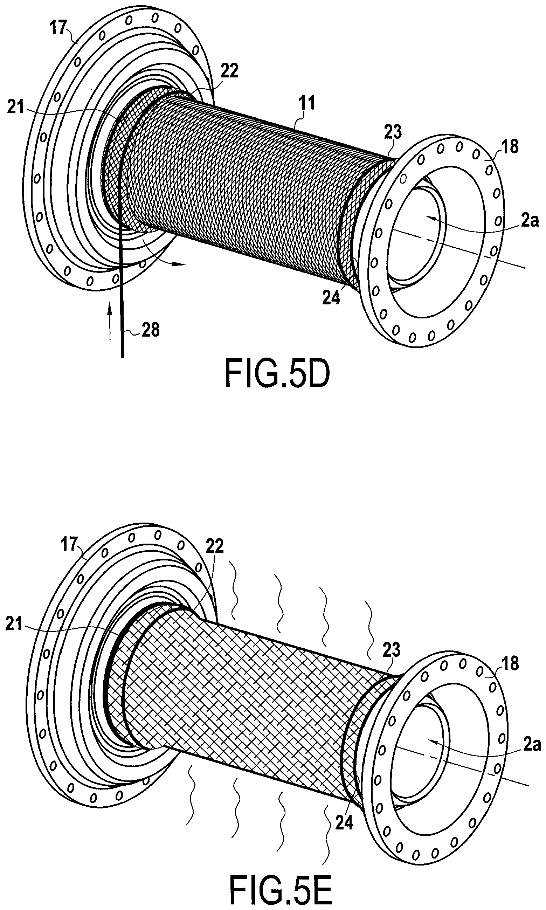

Les figures 5A à 5E illustrent schématiquement cinq étapes d'un procédé permettant de fabriquer la chambre propulsive 2 suivant ce deuxième mode de réalisation. Dans une première étape, illustrée sur la figure 5A, deux demi-coquilles 13a,13b formant la pièce annulaire 13 sont assemblées autour du rétrécissement du segment inférieur 10b de la paroi interne 10 avec au moins la paroi interne 10 et le circuit de refroidissement 12. Dans une deuxième étape, illustrée sur la figure 5B, on pose autour de cet ensemble le film d'étanchéité 16 et on emmanche les embouts axiaux 17 et 18 sur l'ensemble formé par la paroi interne 10 avec la pièce annulaire 13 recouverte par le film d'étanchéité 16 pour former le mandrin 25. Dans une troisième étape, illustrée sur la figure 5C et analogue à celle du procédé illustré pour le premier mode de réalisation, des fibres 27 de renfort sont impregnées de résine liquide et posées autour du mandrin 25 partiellement recouvert par le film d'étanchéité 16, de manière à former l'enveloppe externe 11. Comme pour le premier mode de réalisation, cette pose peut être effectuée par enroulement filamentaire ou alternativement par tressage. Lors de cette pose, les fibres 27 imprégnées vont épouser les contours des protubérances radiales 19,20 des embouts axiaux 17,18 pour former les concavités dans laquelle ces protubérances radiales 19,20 sont reçues. Dans une quatrième étape, illustrée sur la figure 5D, des fibres de renfort supplémentaires 28 sont bobinées de manière circonférentielle autour du noyau 25 et des fibres déjà posées pour former les ceintures 21 à 24 adjacentes aux protubérances radiales 19, 20. Lors de cette étape, il est également possible de régler la tension de bobinage, de manière à établir une précontrainte en tension des fibres de renfort supplémentaires 28 des ceintures 21 à 24. Par ailleurs, comme pour le premier mode de réalisation, les fibres de renfort supplémentaires 28 formant les ceintures 21 à 24 peuvent ne pas être préimprégnées, puisque l'excès de résine des premières fibres 27 de renfort pourrait suffire à imprégner les ceintures 21 à 24. Toutefois, ces fibres de renfort supplémentaires 28 peuvent aussi être préimprégnées, suivant le choix de la personne du métier. Finalement, dans une cinquième étape, illustrée sur la figure 5E, on procède au durcissement de la résine, de manière à durcir l'enveloppe externe 11. Dans le procédé illustré, la résine est une résine thermodurcissable. En conséquence, dans cette quatrième étape le durcissement est effectué par cuisson dans un four ou autoclave. Toutefois, il serait alternativement envisageable d'utiliser une résine thermoplastique, rendue liquide à chaud et durcissant lors de son refroidissement.

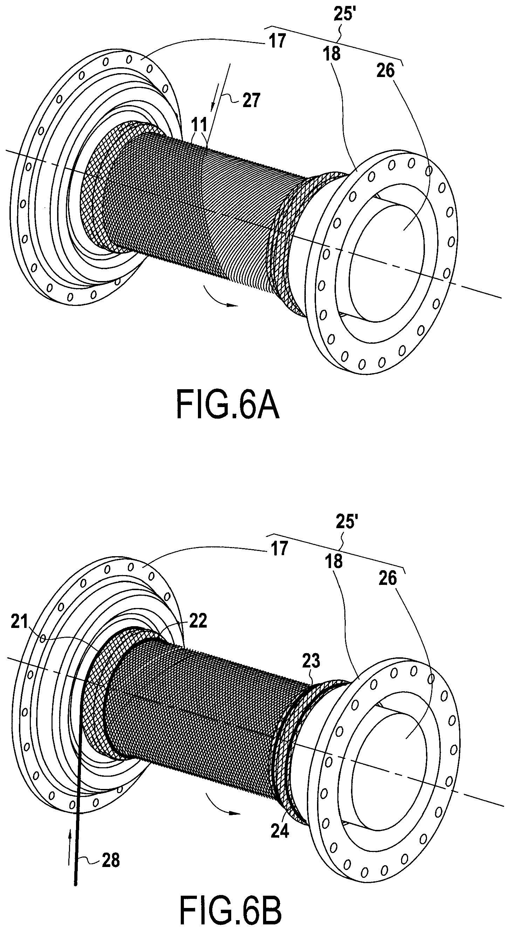

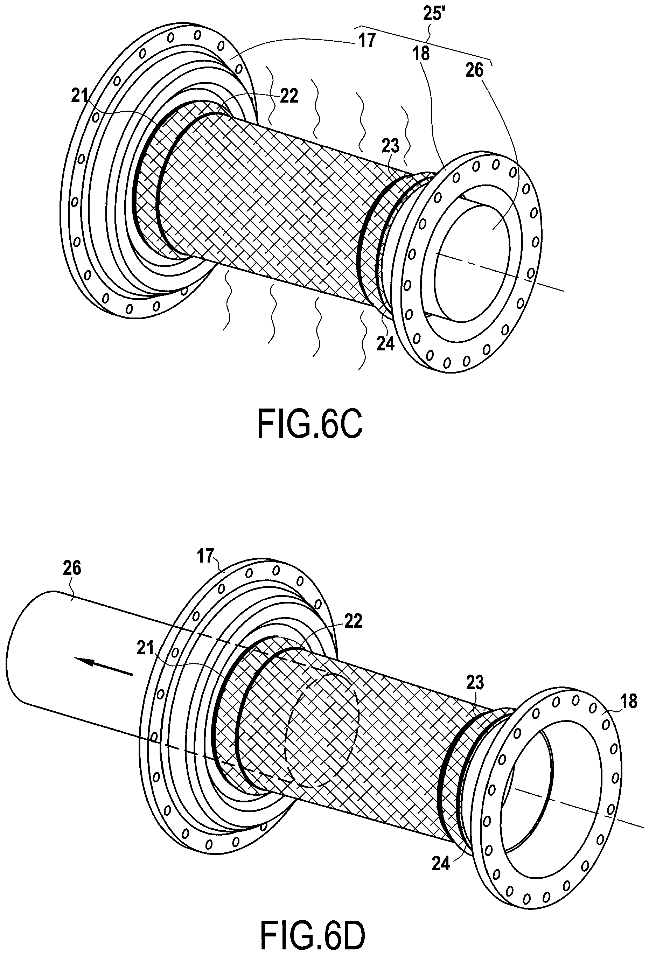

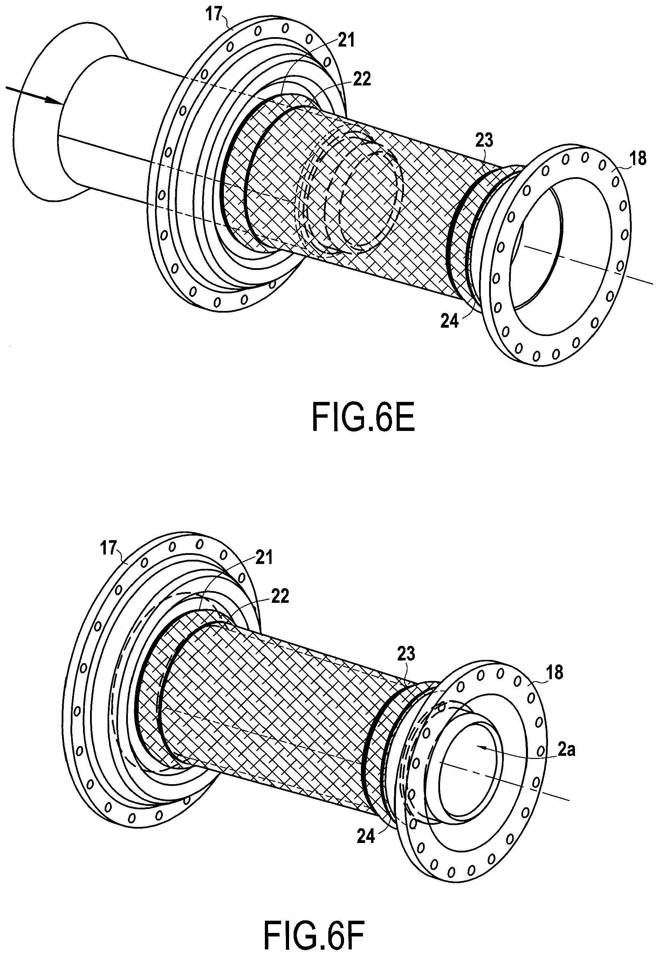

Toutefois, la forme cylindrique de l'enveloppe externe 11 permet aussi de fabriquer la chambre propulsive 1 suivant un procédé alternatif illustré sur les figures 6A à 6F, dans lequel on forme et on cuit d'abord l'enveloppe externe 11 et on introduit ensuite, à l'intérieur de cette enveloppe externe 11, la paroi interne 10 avec le circuit de refroidissement 12 et la pièce annulaire 13. Dans une première étape de cet autre procédé, illustrée sur la figure 6A, des fibres de renfort 27 sont imprégnées de résine liquide et posées autour d'un mandrin 25' en partie démontable, de manière à former l'enveloppe externe 11. Comme pour le premier mode de réalisation, cette pose peut être effectuée par enroulement filamentaire. Ce mandrin en partie démontable 25' comprend un corps principal extractible 26 entre les deux embouts radiaux 17, 18. Comme dans le procédé précédent, lors de la pose de ces fibres de renfort, les fibres 27 imprégnées vont épouser les contours des protubérances radiales 19,20 des embouts axiaux 17,18 pour former les concavités dans laquelle ces protubérances radiales 19,20 sont reçues. Dans une deuxième étape, illustrée sur la figure 6B, des fibres de renfort supplémentaires 28 sont bobinées de manière circonférentielle autour du mandrin 25' et des fibres 27 déjà posées pour former les ceintures 21 à 24 adjacentes aux protubérances radiales 19, 20. Lors de cette étape, il est aussi possible de régler la tension de bobinage, de manière à établir une précontrainte en tension des fibres de renfort supplémentaires 28 des ceintures 21 à 24. Par ailleurs, comme pour le premier mode de réalisation, les fibres de renfort supplémentaires 28 formant les ceintures 21 à 24 peuvent ne pas être pré-imprégnées, puisque l'excès de résine des premières fibres 27 de renfort pourrait suffire à imprégner les ceintures 21 à 24. Toutefois, ces fibres de renfort supplémentaires 28 peuvent aussi être pré-imprégnées, suivant le choix de la personne du métier. Ensuite, dans une troisième étape, illustrée sur la figure 6C, on procède à durcir la résine, de manière à durcir l'enveloppe externe 11. Dans le procédé illustré, la résine est une résine thermodurcissable. En conséquence, dans cette troisième étape le durcissement est effectué par cuisson dans un four ou autoclave. Toutefois, dans ce procédé il serait aussi alternativement envisageable d'utiliser une résine thermoplastique, rendue liquide à chaud et durcissant lors de son refroidissement. Après ce durcissement, dans une quatrième étape illustrée sur la figure 6D, on procède à démonter le noyau démontable 25' en extrayant de l'intérieur de l'enveloppe externe 11 son corps principal 26. Par contre, les embouts axiaux 17, 18 vont rester fixés aux deux extrémités de l'enveloppe externe 11 grâce à l'emboîtement de leurs protubérances radiales 19, 20 dans les concavités complémentaires sur la surface interne de l'enveloppe externe 11. Ensuite, après avoir éventuellement installé le film d'étanchéité 16 sur une surface interne de l'enveloppe externe 11, par exemple par collage, la paroi interne 10, avec le circuit de refroidissement 12 et la pièce annulaire 13, est introduite à l'intérieur de l'enveloppe externe 11 dans une cinquième étape illustrée sur la figure 6E en remplacement du corps principal 26 du noyau démontable 25' et fixée à ses deux extrémités axiales aux embouts axiaux 17, 18 correspondants dans la position illustrée sur la figure 6F. Cette fixation peut être effectuée par exemple par soudage.

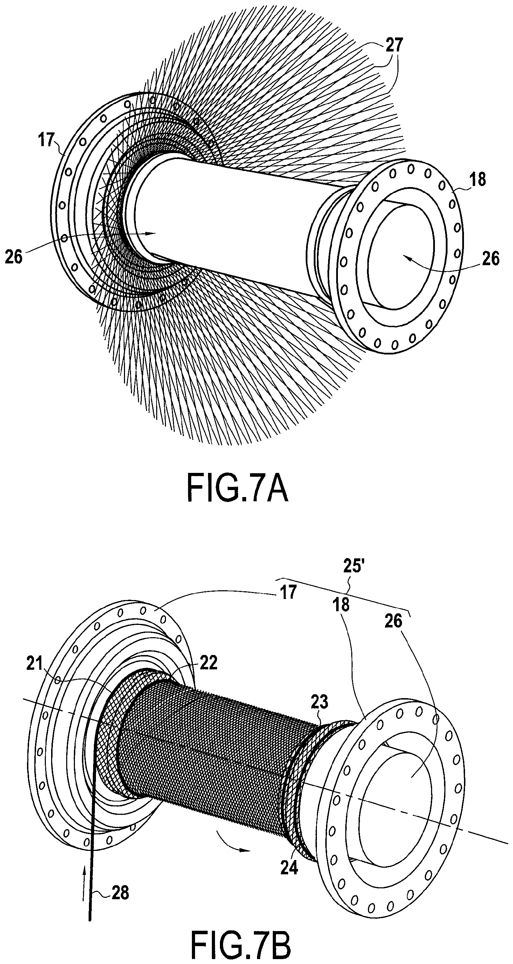

Bien que dans chacun des exemples de procédés de fabrication décrits ci-dessus la pose des fibres 27 de renfort de l'enveloppe externe soit effectuée par enroulement filamentaire, autour du mandrin, de fibres déjà imprégnées de résine, il est également possible d'envisager des procédés alternatifs, dans lesquels les fibres soient posées autrement que par enroulement filamentaire et/ou soient posées sèches et imprégnées ultérieurement. Un tel autre procédé de fabrication est illustré sur les figures 7A à 7G.

Dans une première étape, illustrée schématiquement sur la Fig. 7A, on procède à poser, sur le mandrin 25', partiellement démontable, des fibres 27 de renfort sèches. Ces fibres 27 sont tressées, bi- ou tridimensionnellement, autour du mandrin 25' en une ou plusieurs couches superposées. Ensuite, dans une deuxième étape illustrée sur la figure 7B, des fibres de renfort supplémentaires sont bobinées de manière circonférentielle autour du mandrin 25' et des fibres déjà posées pour former les ceintures 21 à 24 adjacentes aux protubérances radiales 19, 20. Lors de cette étape, il est aussi possible de régler la tension de bobinage, de manière à établir une précontrainte en tension des fibres de renfort des ceintures 21 à 24.

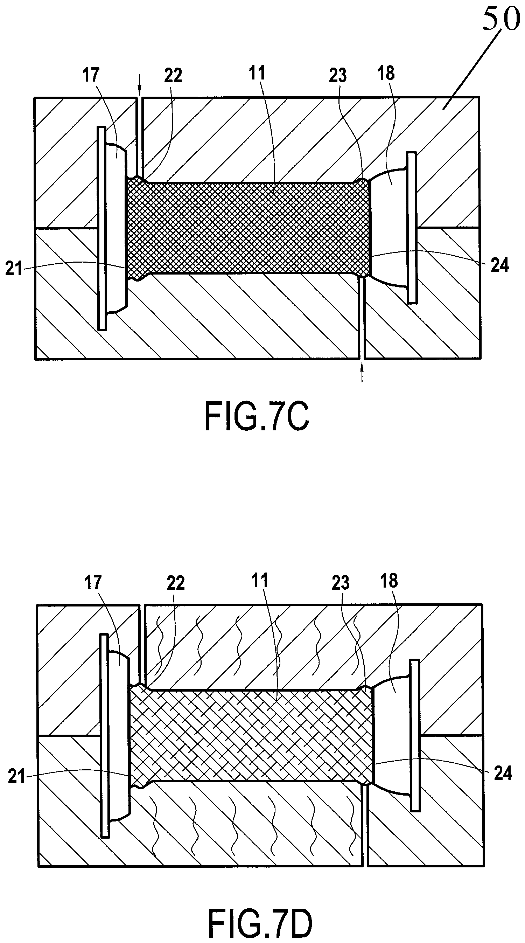

Pour imprégner de résine les fibres de renfort, le mandrin 25', enveloppé par ces fibres, est ensuite introduit dans un moule conforme 50, dans lequel une résine thermodurcissable va être injectée sous pression et potentiellement à chaud, comme illustré sur la figure 7C. Le moule peut, avant injection, être potentiellement chauffé également. Dans l'étape suivante, illustrée sur la figure 7D, avec le moule 50 encore fermé, l'ensemble est chauffé pour durcir la résine et ainsi former la matrice organique de l'enveloppe externe 11, par la méthode dite de moulage par transfert de résine (RTM). Alternativement, toutefois, une résine thermoplastique à basse viscosité pourrait être injectée de manière analogue, à chaud, dans le moule 50 et refroidie pour son durcissement.

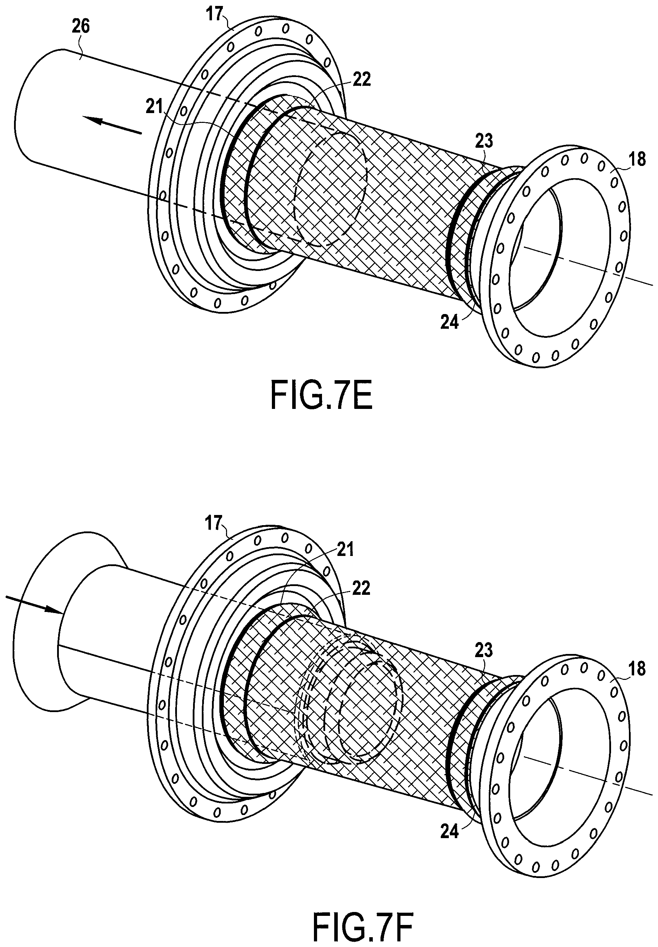

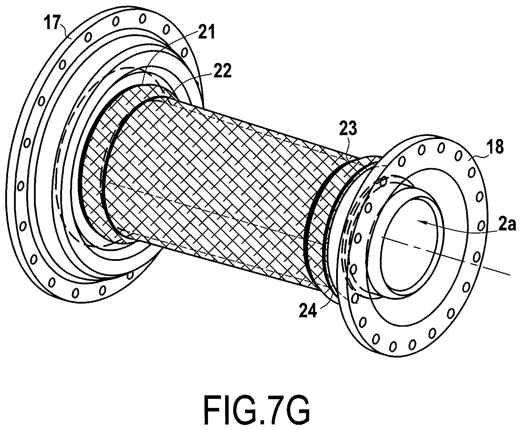

Après le durcissement de la résine, le mandrin 25' avec l'enveloppe externe 11 peut être extrait du moule 50, pour ensuite procéder aux étapes illustrées sur les figures 7E à 7G, analogues à celles illustrées, pour le procédé précédent, sur les figures 6D à 6F. Ainsi, on démonte le noyau démontable 25', comme illustré sur la figure 7E, en extrayant de l'intérieur de l'enveloppe externe 11 son corps principal 26 tout en laissant les embouts axiaux 17, 18 fixés aux deux extrémités de l'enveloppe externe 11 grâce à l'emboîtement de leurs protubérances radiales 19, 20 dans les concavités complémentaires sur la surface interne de l'enveloppe externe 11. Ensuite, après avoir éventuellement installé le film d'étanchéité 16 sur une surface interne de l'enveloppe externe 11, par exemple par collage, la paroi interne 10, avec le circuit de refroidissement 12 et la pièce annulaire 13, est introduite à l'intérieur de l'enveloppe externe 11, comme illustré sur la figure 7F, en remplacement du corps principal 26 du noyau démontable 25' et fixée à ses deux extrémités axiales aux embouts axiaux 17, 18 correspondants dans la position illustrée sur la figure 7G.

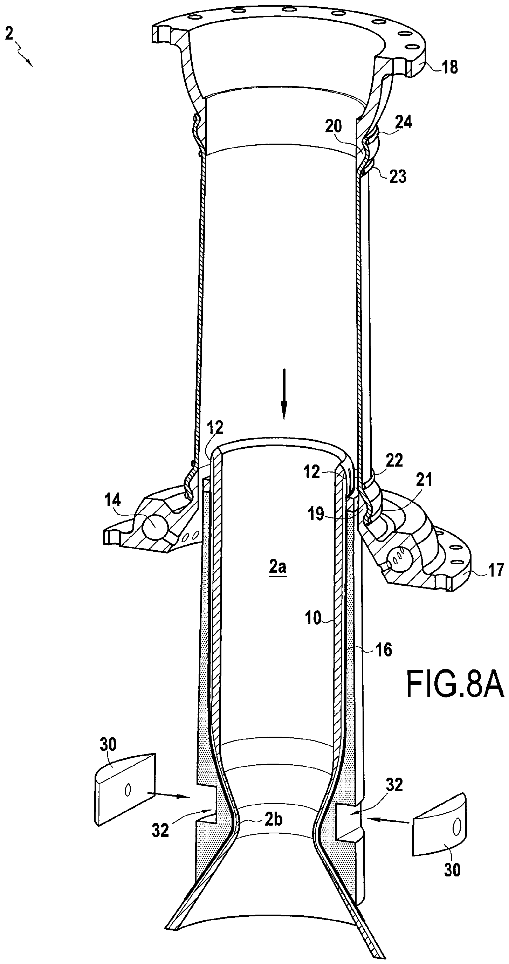

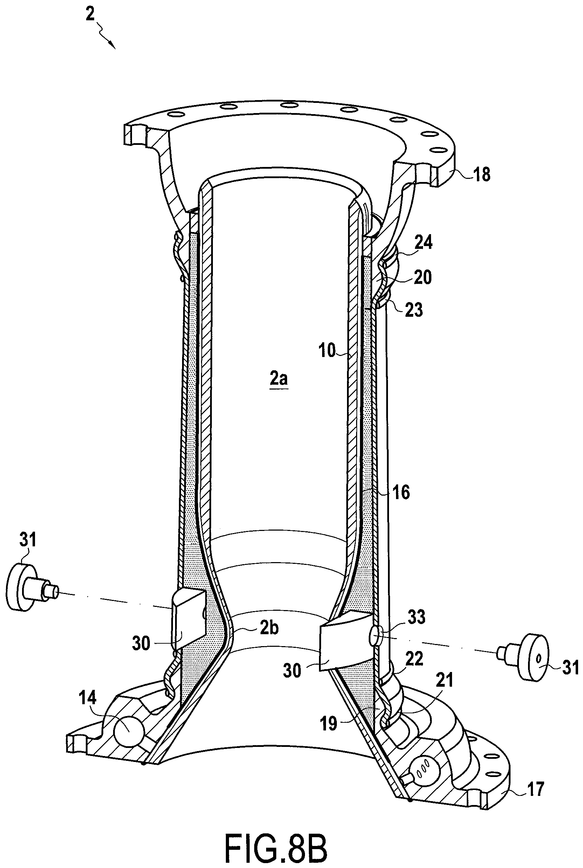

Finalement, les figures 8A et 8B illustrent un troisième mode de réalisation qui est une variante de la chambre propulsive suivant le deuxième mode de réalisation, dans laquelle, afin de transmettre à l'enveloppe externe 11 les efforts principalement axiaux liés aux effets de fond exercés par les gaz de combustion sur le col 2b directement depuis la pièce annulaire 13 sans passer par la paroi interne 10, au moins un dispositif de liaison comprenant une clavette 30 et un pion 31 est disposé entre la pièce annulaire 13 et l'enveloppe externe 11. La clavette 30 est reçue dans une encoche transversale 32 dans une surface externe de la pièce annulaire 13, de manière à transmettre des efforts sensiblement axiaux de la pièce annulaire 13 à la clavette 30. Quand la pièce annulaire 13 est formée par deux demi-coquilles 13a, 13b, comme dans le mode de réalisation illustré, chaque encoche 32 peut se prolonger sur deux demi-coquilles 13a, 13b adjacentes de manière à transmettre des efforts axiaux des deux demi-coquilles 13a,13b à la clavette 30. Une extrémité du pion 31 peut être reçue dans la clavette 30 à travers un orifice 33 dans l'enveloppe externe 11, afin d'établir une liaison mécanique entre la clavette 30 et l'enveloppe externe 11. Le pion 31 peut être rendu solidaire de la clavette 30 par une liaison démontable de type vis-écrou, par exemple. L'orifice 33 dans l'enveloppe externe 11 peut être réalisé par exemple pendant le moulage de l'enveloppe externe 11 ou par usinage après le durcissement de la résine liquide formant la matrice organique de l'enveloppe externe 11. Le bord de cet orifice 33 peut être renforcé, par exemple avec des couches supplémentaires de fibres de renfort. Dans ce mode de réalisation, afin d'éviter que le film 16 soit percé par les pions 31, ce film 16 est situé entre la paroi interne 10 et les demi-coquilles 13a,13b. Les éléments restants de la chambre propulsive 1 suivant ce troisième mode de réalisation restent équivalents à ceux présentés pour le deuxième mode de réalisation.

Quoique la présente invention ait été décrite en se référant à des exemples de réalisation spécifiques, il est évident que différentes modifications et changements peuvent être effectués sur ces exemples sans sortir de la portée générale de l'invention telle que définie par les revendications.

## Revendications

1. Chambre propulsive (2) de moteur-fusée à ergol liquide, comprenant au moins :
une paroi interne (10) métallique ;
une enveloppe externe (11) en matériau composite à matrice organique ; et
un circuit de refroidissement (12);
la chambre propulsive (2) étant **caractérisée en ce qu'**elle comprend en outre au moins un premier embout axial (17,18), solidaire de la paroi interne métallique et présentant au moins une protubérance radiale (19,20) reçue dans une concavité d'une face interne de l'enveloppe externe (11), cette concavité étant située axialement entre une première et une deuxième ceinture (21,22 ;23,24) de fibres de renfort orientées de manière sensiblement circonférentielle dans ladite enveloppe externe (11).

2. Chambre propulsive (2) suivant la revendication 1, dans laquelle ledit matériau composite à matrice organique comprend des fibres de renfort en carbone.

3. Chambre propulsive (2) suivant l'une quelconque des revendications précédentes, dans laquelle lesdites ceintures (21,22 ;23,24) de fibres de renfort entourent au moins une couche interne de l'enveloppe externe (11).

4. Chambre propulsive (2) suivant l'une quelconque des revendications précédentes, dans laquelle lesdites ceintures (21,22 ;23,24) de fibres de renfort sont précontraintes en tension.

5. Chambre propulsive (2) suivant l'une quelconque des revendications précédentes, dans laquelle la protubérance radiale (19,20) s'étend sur un pourtour du premier embout axial (17,18).

6. Chambre propulsive (2) suivant l'une quelconque des revendications précédentes, dans laquelle la paroi interne (10) définit un col (2b) de tuyère convergente-divergente.

7. Chambre propulsive (2) suivant la revendication 6, comprenant en outre une pièce annulaire (13) intercalée entre la paroi interne (10) et un segment cylindrique de l'enveloppe externe (11) autour dudit col (2b) de tuyère.

8. Chambre propulsive (2) suivant la revendication 7, comprenant en outre un dispositif de liaison pour transmettre au moins une force axiale entre la pièce annulaire (13) et l'enveloppe externe (11) sans passer par la paroi interne (10).

9. Chambre propulsive (2) suivant l'une quelconque des revendications précédentes, comprenant en outre une barrière d'étanchéité entre le circuit de refroidissement (12) et l'enveloppe externe (11).

10. Chambre propulsive suivant l'une quelconque des revendications précédentes, comprenant un deuxième embout axial (17,18), solidaire d'une autre extrémité de ladite paroi interne (10) et présentant au moins une autre protubérance radiale (19,20) reçue dans une autre concavité d'une face interne de l'enveloppe externe (11), cette autre concavité étant située axialement entre une troisième et une quatrième ceinture (21,22 ;23,24) de fibres de renfort orientées de manière sensiblement circonférentielle dans ladite enveloppe externe (11).

11. Procédé de fabrication d'une chambre propulsive suivant l'une quelconque des revendications précédentes, comprenant au moins les étapes suivantes :
la pose de fibres (27) autour d'un mandrin (25,25') incorporant au moins ledit premier embout axial (17,18), pour former au moins une couche interne de l'enveloppe externe (11), les fibres (27) épousant un contour de la protubérance radiale (19,20) d'au moins le premier embout axial (17,18) pour former la concavité dans laquelle cette protubérance radiale (19,20) est reçue ;
le bobinage de fibres de renfort supplémentaires (28) en direction sensiblement circonférentielle pour former au moins lesdites première et deuxième ceintures (21,22 ;23,24) de fibres de renfort ;
l'imprégnation des fibres avec une résine liquide ; et
le durcissement de la résine pour former la matrice organique du matériau composite de l'enveloppe externe.

12. Procédé de fabrication suivant la revendication 11, dans lequel, après le durcissement de la résine, un corps principal (26) du mandrin (25') est extrait de l'intérieur de l'enveloppe externe (11) et la paroi interne (10) et le circuit de refroidissement (12) de la chambre propulsive sont insérés à l'intérieur de l'enveloppe externe (11) et fixées au premier embout (17,18).

13. Procédé de fabrication suivant la revendication 11, dans lequel ledit mandrin (25) incorpore aussi au moins la paroi interne (10) et le circuit de refroidissement (12).

14. Procédé de fabrication suivant l'une quelconque des revendications 11 à 13, dans lequel lesdites fibres (27) sont tressées, bi-et/ou tridimensionnellement, autour du mandrin (25,25') et imprégnées ensuite, pour former au moins la couche interne de l'enveloppe externe (11).

15. Procédé de fabrication suivant l'une quelconque des revendications 11 à 13, dans lequel des feuilles incorporant lesdites fibres imprégnées sont drapées autour du mandrin (25,25') pour former au moins la couche interne de l'enveloppe externe (11).

16. Procédé de fabrication suivant l'une quelconque des revendications 11 à 15, dans lequel lesdites protubérances radiales (19, 20) sont fabriquées par un procédé de fabrication additive.

## Patentansprüche

1. Brennkammer (2) für ein Flüssigtreibstoffraketentriebwerk, umfassend mindestens:
eine Innenwand (10) aus Metall,
eine Außenverkleidung (11) aus Verbundmaterial mit organischer Matrix, und
einen Kühlkreislauf (12),
wobei die Brennkammer (2) **dadurch gekennzeichnet ist, dass** sie ferner mindestens ein erstes axiales Endstück (17, 18) umfasst, das integral mit der Innenwand aus Metall verbunden ist, und mindestens einen radialen Vorsprung (19, 20) aufweist, der in einer konkaven Ausnehmung in einer Innenfläche der Außenverkleidung (11) aufgenommen ist, wobei diese konkave Ausnehmung axial zwischen einem ersten und einem zweiten Gürtel (21, 22; 23, 24) aus Verstärkungsfasern angeordnet ist, die in der Außenverkleidung (11) im Wesentlichen umlaufend ausgerichtet sind.

2. Brennkammer (2) nach Anspruch 1, wobei das Verbundmaterial mit organischer Matrix Verstärkungsfasern aus Kohlenstoff enthält.

3. Brennkammer (2) nach einem der vorhergehenden Ansprüche, wobei die Gürtel (21, 22; 23, 24) aus Verstärkungsfasern mindestens eine innere Schicht der Außenverkleidung (11) umgeben.

4. Brennkammer (2) nach einem der vorhergehenden Ansprüche, wobei die Gürtel (21, 22; 23, 24) aus Verstärkungsfasern zugvorgespannt sind.

5. Brennkammer (2) nach einem der vorhergehenden Ansprüche, wobei sich der radiale Vorsprung (19, 20) auf einem Umfang des ersten axialen Endstücks (17, 18) erstreckt.

6. Brennkammer (2) nach einem der vorhergehenden Ansprüche, wobei die Innenwand (10) einen Hals (2b) einer konvergent/divergenten Düse definiert.

7. Brennkammer (2) nach Anspruch 6, ferner umfassend einen ringförmigen Teil (13), der zwischen der Innenwand (10) und einem zylindrischen Segment der Außenverkleidung (11) um den Düsenhals (2b) herum angeordnet ist.

8. Brennkammer (2) nach Anspruch 7, ferner umfassend eine Verbindungsvorrichtung zum Übertragen mindestens einer Axialkraft zwischen dem ringförmigen Teil (13) und der Außenverkleidung (11) ohne durch die Innenwand (10) zu gehen.

9. Brennkammer (2) nach einem der vorhergehenden Ansprüche, ferner umfassend eine dichte Sperrlage zwischen dem Kühlkreislauf (12) und der Außenverkleidung (11).

10. Brennkammer nach einem der vorhergehenden Ansprüche, umfassend ein zweites axiales Endstück (17, 18), das integral mit einem anderen Ende der Innenwand (10) verbunden ist und mindestens einen anderen radialen Vorsprung (19, 20) aufweist, der in einer anderen konkaven Ausnehmung einer Innenfläche der Außenverkleidung (11) aufgenommen ist, wobei diese andere konkave Ausnehmung axial zwischen einem dritten und einem vierten Gürtel (21, 22; 23, 24) aus Verstärkungsfasern angeordnet ist, die in der Außenverkleidung (11) im Wesentlichen umlaufend ausgerichtet sind.

11. Verfahren zur Herstellung einer Brennkammer nach einem der vorhergehenden Ansprüche, umfassend mindestens die folgenden Schritte:
Anordnen von Fasern (27) um einen Dorn (25, 25'), der mindestens das erste axiale Endstück (17, 18) enthält, um mindestens eine innere Schicht der Außenverkleidung (11) zu bilden, wobei sich die Fasern (27) an eine Kontur des radialen Vorsprungs (19, 20) mindestens des ersten axialen Endstücks (17, 18) anschmiegen, um die konkave Ausnehmung zu bilden, in der dieser radiale Vorsprung (19, 20) aufgenommen ist,
Wickeln von zusätzlichen Verstärkungsfasern (28) in im Wesentlichen umlaufender Richtung, um mindestens den ersten und den zweiten Gürtel (21, 22; 23, 24) aus Verstärkungsfasern zu bilden,
Imprägnieren der Fasern mit einem flüssigen Harz und
Härten des Harzes, um die organische Matrix des Verbundmaterials der Außenverkleidung zu bilden.

12. Herstellungsverfahren nach Anspruch 11, wobei nach dem Aushärten des Harzes ein Hauptkörper (26) des Dorns (25') aus dem Inneren der Außenverkleidung (11) abgezogen wird und die Innenwand (10) und der Kühlkreislauf (12) der Brennkammer ins Innere der Außenverkleidung (11) eingesetzt und am ersten Endstück (17, 18) befestigt werden.

13. Herstellungsverfahren nach Anspruch 11, wobei der Dorn (25) auch mindestens die Innenwand (10) und den Kühlkreislauf (12) enthält.

14. Herstellungsverfahren nach einem der Ansprüche 11 bis 13, wobei die Fasern (27) zwei- und/oder dreidimensional um den Dorn (25, 25') geflochten sind und anschließend imprägniert werden, um mindestens die innere Schicht der Außenverkleidung (11) zu bilden.

15. Herstellungsverfahren nach einem der Ansprüche 11 bis 13, wobei die Bahnen, die die imprägnierten Fasern enthalten, den Dorn (25, 25') umhüllen, um mindestens die innere Schicht der Außenverkleidung (11) zu bilden.

16. Herstellungsverfahren nach einem der Ansprüche 11 bis 15, wobei die radialen Vorsprünge (19, 20) durch ein additives Herstellungsverfahren hergestellt werden.

## Claims

1. A propulsion chamber (2) for a liquid propellant rocket engine, the propulsion chamber comprising at least:
• an inside wall (10) made of metal;
• an outside covering (11) made of organic matrix composite material; and
• a cooling circuit (12);
the propulsion chamber (2) being **characterized in that** it further comprises at least a first axial endpiece (17, 18) secured to the metal inside wall and presenting at least one radial protrusion (19, 20) received in a concave recess in an inside face of the outside covering (11), this concave recess being situated axially between first and second belts (21, 22; 23, 24) of reinforcing fibers oriented substantially circumferentially in said outside covering (11).

2. A propulsion chamber (2) according to claim 1, wherein said organic matrix composite material includes reinforcing fibers made of carbon.

3. A propulsion chamber (2) according to either preceding claim, wherein said belts (21, 22; 23, 24) of reinforcing fibers surround at least one inner layer of the outside covering (11).

4. A propulsion chamber (2) according to any preceding claim, wherein said belts (21, 22; 23, 24) of reinforcing fibers are prestressed in tension.

5. A propulsion chamber (2) according to any preceding claim, wherein the radial protrusion (19, 20) extends around a perimeter of the first axial endpiece (17, 18).

6. A propulsion chamber (2) according to any preceding claim, wherein the inside wall (10) defines a throat (2b) of a convergent-divergent nozzle.

7. A propulsion chamber (2) according to claim 6, further including an annular part (13) interposed between the inside wall (10) and a cylindrical segment of the outside covering (11) around said nozzle throat (2b).

8. A propulsion chamber (2) according to claim 7, further comprising a connection device for transmitting at least an axial force between the annular part (13) and the outside covering (11) without passing via the inside wall (10) .

9. A propulsion chamber (2) according to any preceding claim, further comprising a sealing barrier between the cooling circuit (12) and the outside covering (11).

10. A propulsion chamber according to any preceding claim, including a second axial endpiece (17, 18) secured to the other end of said inside wall (10) and presenting at least one other radial protrusion (19, 20) received in another concave recess of the inside face of the outside covering (11), this other concave recess being situated axially between third and fourth belts (21, 22; 23, 24) of reinforcing fibers oriented substantially circumferentially in said outside covering (11).

11. A fabrication method for fabricating a propulsion chamber according to any preceding claim, the method comprising at least the following steps:
• placing fibers (27) around a core (25, 25') incorporating at least said first axial endpiece (17, 18) in order to form at least an inner layer of the outside covering (11), the fibers (27) fitting closely over an outline of the radial protrusion (19, 20) of at least the first axial endpiece (17, 18) in order to form the concave recess in which the radial protrusion (19, 20) is received;
• winding additional reinforcing fibers (28) in a substantially circumferential direction in order to form at least said first and second belts (21, 22; 23, 24) of reinforcing fibers;
• impregnating the fibers with a liquid resin; and
• hardening the resin in order to form the organic matrix of the composite material of the outside covering.

12. A fabrication method according to claim 11, wherein, after the resin has been hardened, a main body (26) of the core (25') is extracted from the inside of the outside covering (11) and the inside wall (10) and the cooling circuit (12) of the propulsion chamber are inserted inside the outside covering (11) and fastened to the first endpiece (17, 18).

13. A fabrication method according to claim 11, wherein said core (25) also incorporates at least the inside wall (10) and the cooling circuit (12).

14. A fabrication method according to any one of claims 11 to 13, wherein said fibers (27) are two- and/or three-dimensionally braided around the core (25, 25') and subsequently impregnated, in order to form at least the inner layer of the outside covering (11).

15. A fabrication method according to any one of claims 11 to 13, wherein sheets incorporating said impregnated fibers are draped around the core (25, 25') to form at least the inner layer of the outside covering (11).

16. A fabrication method according to any one of claims 11 to 15, wherein said radial protrusions (19, 20) are fabricated by an additive fabrication method.
